# EUROPÄISCHE PATENTANMELDUNG

(11) **EP 1 108 604 A2**
(43) Veröffentlichungstag der Anmeldung: **20.06.2001**
(21) Anmeldenummer: 00126351.6
(22) Anmeldetag: 02.12.2000
(51) Int. Cl.: B60K 31/04, G05B 13/04, B60K 31/00

(54) **Verfahren zur Beschleunigungsüberwachung für eine Längsdynamiksteuerung oder -regelung in Kraftfahrzeugen**

(30) Priorität: 16.12.1999 DE 19960782
(71) Anmelder: Mannesmann VDO Aktiengesellschaft, 60388 Frankfurt am Main (DE)
(72) Erfinder: Reuter, Hagen, Dr., 60316 Frankfurt (DE)
(74) Vertreter: Rassler, Andrea, Dipl.-Phys.

(57) **Zusammenfassung**

Die Erfindung betrifft ein Verfahren zur Beschleunigungsüberwachung für eine Längsdynamiksteuerung oder -regelung in Kraftfahrzeugen, bei welcher ein Beschleunigungsistwert mit einem Beschleunigungssollwert verglichen wird, wobei ein fehlerhafter Betriebszustand des Kraftfahrzeuges erkannt wird, wenn der Beschleunigungsistwert außerhalb eines den Beschleunigungssollwert einschließenden Fehlerkorridors liegt.

Bei einem Verfahren, bei welchem kritische Fahrsituationen schnellstmöglich erkannt werden können, wird der Fehlerkorridor in Abhängigkeit vom aktuellen Fahrverhalten des Kraftfahrzeuges veränderlich eingestellt.

## Beschreibung

Die Erfindung betrifft ein Verfahren zur Beschleunigungsüberwachung für eine Längsdynamiksteuerung oder -regelung in Kraftfahrzeugen, bei welcher ein Beschleunigungsistwert mit einem Beschleunigungssollwert verglichen wird, wobei ein fehlerhafter Betriebszustand des Kraftfahrzeuges erkannt wird, wenn der Beschleunigungsistwert außerhalb eines den Beschleunigungssollwert einschließenden Fehlerkorridors liegt.

Bei herkömmlichen Geschwindigkeitsregelanlagen werden zur Erkennung fehlerhafter Betriebszustände Geschwindigkeitsschwellen und/oder Beschleunigungsschwellen genutzt. Diese Schwellwerte sind dabei fest und unveränderlich eingestellt. Ein fehlerhaftes oder unzulässiges Verhalten des Fahrzeuges wird erkannt und der aktive Regelvorgang beendet, wenn sich ohne Fahrereinwirkung die Fahrzeuggeschwindigkeit um ein bestimmtes Maß von der Sollgeschwindigkeit entfernt oder im Falle der Beschleunigung eine unzulässige Beschleunigung bzw. Verzögerung erreicht wird.

Bei Regeleinrichtungen, welche sowohl den Abstand als auch die Geschwindigkeit eines Fahrzeuges einstellen, können die Geschwindigkeitsschwellen in den Situationen nicht verwendet werden, in welchen die Abstandsregelung aktiv ist. Für solche Einrichtungen werden feste Beschleunigungsschwellen verwendet, die aber so eingestellt werden müssen, dass sie schon im sicherheitskritischen Verzögerungsbereich liegen. Für das Sicherheitskonzept des Fahrzeuges bedeutet das aber, dass einige Fehler erst bei einer sehr starken Auswirkung auf das Fahrverhalten des Fahrzeuges erkannt werden können, was zu unzulässigen kritischen Fahrsituationen führt.

Der Erfindung liegt die Aufgabe zugrunde, ein Verfahren zur Beschleunigungsüberwachung bei Längsdynamikregelung in Fahrzeugen anzugeben, bei welchem kritische Fahrsituationen schnellstmöglich erkannt werden.

Erfindungsgemäß wird die Aufgabe dadurch gelöst, dass der Fehlerkorridor in Abhängigkeit vom aktuellen Fahrverhalten des Kraftfahrzeuges veränderlich eingestellt wird.

Der Vorteil der Erfindung besteht darin, dass Fehler bzw. unzulässige Abweichungen schon dann erkannt werden, wenn die Auswirkungen auf das Fahrverhalten gering sind. Dies ist einfach dadurch möglich, dass relative bzw. dynamische Beschleunigungsschwellen zur Überwachung herangezogen werden und nicht wie bisher absolute und feste.

In einer Weiterbildung wird der Fehlerkorridor der Beschleunigung dynamisch dem Fahrverhalten des Kraftfahrzeuges angepaßt. Durch die Verwendung eines Fehlerkorridors führen geringfügige Abweichungen des Beschleunigungsistwertes nicht zum Eingriff in die Regelung.

In einer einfachen Ausführung wird der Fehlerkorridor in Abhängigkeit der Fahrzeuggschwindigkeit des zu regelnden Fahrzeuges eingestellt.

Alternativ dazu kann der Fehlerkorridor in Abhängigkeit des Beschleunigungsist- und/oder -sollwertes variiert werden. In beiden Fällen ist ein schnelles Reagieren auf Veränderungen in der Fahrdynamik der Kraftfahrzeuges möglich. Ausserdem können sicherheitskritische Situationen individueller berücksichtigt werden. So kann bei hohen Fahrzeuggeschwindigkeiten der Bereich des Beschleunigungssollwertes enger gewählt werden als bei geringeren Geschwindigkeiten.

Vorteilhafterweise geht der aktive Regelvorgang der Längsdynamikregelung des Kraftfahrzeuges in einen Fehlermodus, wenn der Beschleunigungsistwert ausserhalb des den Beschleunigungssollwert kennzeichnenden Fehlerkorridors liegt. Aus Sicherheitsgründen gehen Bremse, Motor bzw. Antriebsstrang in einen Notlaufbetrieb, wohingegen die Geschwindigkeits- bzw. die Abstandregelung beendet werden.

In einer Weiterbildung der Erfindung wird der Beschleunigungssollwert in einem ersten Fahrdynamiksystem des Fahrzeuges bestimmt und der ermittelte Beschleunigungssollwert zur Ansteuerung eines zweiten Fahrdynamiksystems des Fahrzeuges an dieses ausgegeben, welches den ermittelten Beschleunigungssollwert mit dem Beschleunigungsistwert vergleicht und im Ergebnis des Vergleichs ein geschwindigkeitsregulierendes Stellelement des Kraftfahrzeuges ansteuert.

Vorteilhafterweise beinhaltet das erste Fahrdynamiksystem eine Abstandsregeleinrichtung zur Einstellung des Abstands des zu regelnden Fahrzeuges zu einem vorausfahrenden Fahrzeug , welche aus einem einzustellenden Abstand den Beschleunigungssollwert ermittelt.

So wird der von der Abstandsregeleinrichtung ermittelte Beschleunigungssollwert zur Ansteuerung einer Bremsvorrichtung des Kraflfahrzeuges, einer Motorsteuerelektronik bzw. einer Antriebsstrangregelung oder einer Getriebesteuerung genutzt werden, wodurch Rechenkapazität in den genannten Fahrzeugdynamiksystemen freigesetzt wird.

Bei der alleinigen Verwendung einer Bremsvorrichtung des Kraftfahrzeuges, einer Motorsteuerelektronik bzw. einer Antriebsstrangregelung oder einer Getriebesteuerung besteht die Möglichkeit, das der Fahrer über eine entsprechende Schnittstelle dieser Systeme den Beschleunigungssollwert vorgibt.

Die Erfindung läßt zahlreiche Ausführungsformen zu. Eine davon soll anhand der in den Zeichnungen dargestellten Figuren näher erläutert werden.

Es zeigt:
- Fig. 1:: Geschwindigkeits- und Abstandsregeleinrichtung,
- Fig. 2:: Verfahren zur Beschleunigungsüberwachung gemäß dem Stand der Technik,
- Fig. 3:: erfindungsgemäße Beschleunigungsüberwachung.

Gleiche Merkmale sind mit gleichen Bezugszeichen gekennzeichnet.

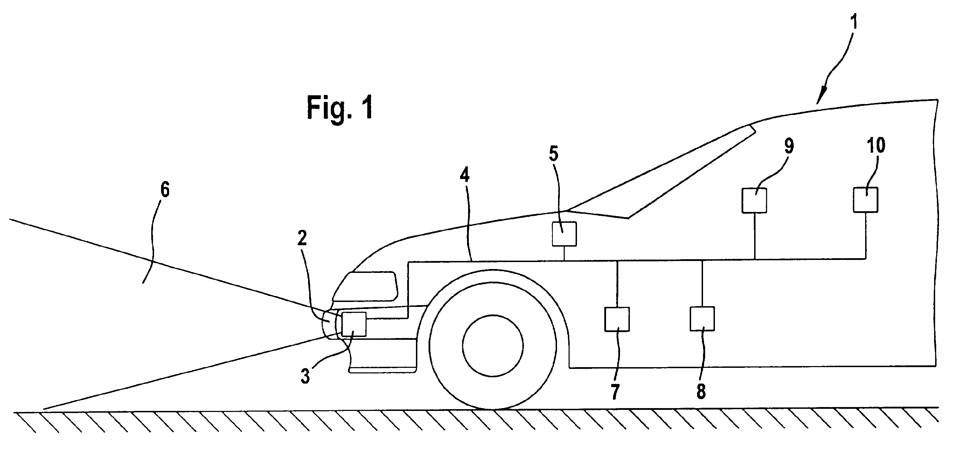

In der Figur 1 ist an dem Stoßfänger 2 eines Kraftfahrzeuges 1 ein automatisches Geschwindigkeits- und Abstandsregelsystem 3 zur Einhaltung des Sicherheitsabstandes von Fahrzeugen angeordnet, welches in einem Gehäuse einen Radarsensor, eine Signalauswerteschaltung und das Abstands- und Geschwindigkeitsregelsystem enthält, die nicht weiter dargestellt sind. Bei Aktivierung der Abstandsregelung durch den Fahrer des kraftfahrzeuges werden vorausfahrende Fahrzeuge oder andere Hindernisse durch den Sensorstrahl 6 des Radarsensors erfasst. Über ein im Fahrzeug 1 vorhandenes Bussystem 4 ist das automatische Geschwindigkeits- und Abstandsregelsystem 3 beispielsweise mit der Motorsteuerung 5, einem Getriebe 7 und einer Bremse 8 verbunden. Elektronische Befehle, welche von der automatischen Geschwindigkeits- und Abstandsregelung 3 erzeugt werden, regulieren automatisch die Geschwindigkeit und somit den Abstand des geregelten Fahrzeuges 1 zu einem vorausfahrenden, langsameren Fahrzeug.

Ist die Geschwindigkeitsregelung aktiviert, wird von dem Geschwindigkeits- und Abstandsregelsystem 3 die aktuelle Fahrzeugeschwindigkeit mit der durch den Fahrer eingestellten Wunschgeschwindigkeit verglichen und auf diese geregelt.

Im Falle der Abstandregelung wird aus den vom Radarsensor (Sensorstrahl 6) gelieferten Signalen der Abstand und die Relativgeschwindigkeit der vorausfahrenden Fahrzeuge bzw. Hindernisse bestimmt und daraus der sichere Mindestabstand ermittelt. Ist der Abstandsbetrieb vom Fahrer mit Hilfe des Bedienschalters 10 eingestellt, wird der Abstand zum vorausfahrenden Fahrzeug automatisch auf den gewählten Abstand eingeregelt.

Aus der Signallaufzeit und der Istgeschwindigkeit des zu regelnden Fahrzeuges wird neben dem tatsächlichen Abstand zum vorausfahrenden Fahrzeug die Geschwindigkeit des vorausfahrenden Fahrzeuges und ein kritischer Abstand bestimmt. Aus der Beschleunigung oder Verzögerung, welche in Abhängigkeit des ermittelten Abstandes und der anderen Größen eingestellt wird, ergibt sich die neue Geschwindigkeit des zu regelnden Fahrzeuges. Dazu werden Motorelektronik 5 und Bremse 8 angesteuert.

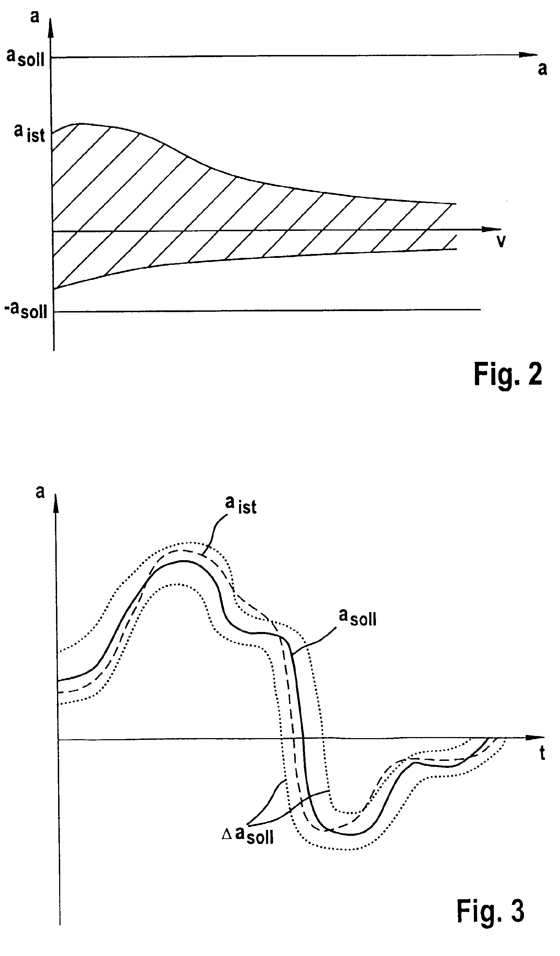

Fig. 2 zeigt das Sicherheitskonzept, welches gemäß dem Stand der Technik in Geschwindigkeitsregelanlagen zur Bestimmung fehlerhafter Betriebszustände genutzt wird. In solchen Systemen ist ein absolut und fest vorgegebener Sollwert a_{Soll} für die Beschleunigung eingestellt, der zur Kontrolle von fehlerhaften Zuständen dient. Wie aus Fig. 2 hervorgeht, ist aber bei hohen Geschwindigkeiten eine geringe Änderung der Fahrzeugbeschleunigung schon sicherheitskristisch. Ein solcher Fehler wird aber nur angezeigt werden, wenn sich die Beschleunigung außerhalb des durch a _{Soll} und -a _{Soll} vorgegebenen Bereiches befindet. Einem sicheren Fahrzustand würde aber nur genüge getan, wenn sich die Istbeschleunigung innerhalb des schraffiert gezeichneten Bereiches findet.

Anhand Fig. 3 soll nun das erfindungsgemäße Verfahren erläutert werden. Dabei kennzeichnet der punktierte Bereich Δ a _{Soll} den Fehlerkorridor, in welchem die Istbeschleunigung a _{Ist} sich bewegen darf, ohne dass ein fehlerhafter Betriebszustand erkannt wird. Bei der Bestimmung des Bereiches Δ a _{Soll} wird das dynamische Fahrverhalten herangezogen, d. h. es wird die Beschleunigung über der Zeit betrachtet. Darüber hinaus kann der Fehlerkorridor in Abhängigkeit von der Geschwindigkeit des zu regelnden Fahrzeuges bestimmt werden, aber auch von dem Absolutwert des aktuellen Beschleunigungswertes (Ist-und/oder Sollwert) abhängig sein. Insbesondere unter Hinblick auf den Beschleunigungssollwert ist der Bereich des Beschleunigungsistwertes bei langsamer Änderung der Beschleunigung des Fahrzeuges enger bemessen als bei schnellen Änderungen der Fahrzeugbeschleunigung.

Somit können durch Variation der Fehlergrenzen Beschleunigungsschwellen des Fahrzeuges eingestellt werde, die der augenblicklichen Fahrsituation des Kraftfahrzeuges gerecht werden. Dies soll an einem einfachen Zahlenbeispiel erläutert werden.

Die zulässige Sollbeschleunigung der Abstands- und Geschwindigkeitsregelungen liegt im Bereich von +1 bis -2 m/s². Bei Verwendung fest vorgegebener Plus/ Minus- Beschleunigungsschwellen liegen diese bei +2 m/s² bzw. -3 m/s².

Bei einer Sollbeschleunigung von beispielsweise 0 m/s² , was bedeutet, dass das zu regelnde Fahrzeug einem vorausfahrenden Fahrzeuges mit einer konstanten Geschwindigkeit folgt, wird ein Fehler erst bei einer Abweichung mit einem Betrag von 2 m/s bzw. 3 m/s erkannt. Mit Hilfe des erfindungsgemäßen Verfahrens können fehlerhafte Abweichungen mit einem Betrag von 0,5 m/s² problemlos erkannt werden.

Dieses Verfahren zur Längsdynamiküberwachung ist aber nicht nur in Abstandsregelsystemen einsetzbar, sondern in allen Fahrzeugsystemen, die in die Längsdynamik des Fahrzeuges eingreifen bzw. diese steuern oder regeln. So wird z. B. mittels einer Beschleunigungs- bzw. Verzögerungsschnittstelle eine elektrische ansteuerbare Bremse (brake by wire) betrieben, bei welcher der Fahrer über ein Fahrpedal oder einen Joystick eine Sollbeschleunigung vorgibt. Auch in Antriebsstrangregelungen sind solche Beschleunigungsvorgaben denkbar.

## Patentansprüche

1. Verfahren zur Beschleunigungsüberwachung für eine Längsdynamiksteuerung oder -regelung von Kraftfahrzeugen, bei welcher ein Beschleunigungsistwert mit einem Beschleunigungssollwert verglichen wird, wobei ein fehlerhafter Betriebszustand des Kraftfahrzeuges erkannt wird, wenn der Beschleunigungsistwert außerhalb eines den Beschleunigungsollwert einschließenden Fehlerkorridors liegt, **dadurch gekennzeichnet**, dass der Fehlerkorridor in Abhängigkeit vom aktuellen Fahrverhalten des Kraftfahrzeuges veränderlich eingestellt wird.

2. Verfahren nach Anspruch 1, **dadurch gekennzeichnet**, dass der Fehlerkorridor der Beschleunigung dynamisch dem Fahrverhalten des Kraftfahrzeuges angepasst wird.

3. Verfahren nach Anspruch 1 oder 2, **dadurch gekennzeichnet**, dass der Fehlerkorridor in Abhängigkeit der Fahrzeuggeschwindigkeit eingestellt wird.

4. Verfahren nach Anspruch 2 , **dadurch gekennzeichnet**, dass der Fehlerkorridor in Abhängigkeit vom Beschleunigungsist- und/oder -sollwert variiert.

5. Verfahren nach Anspruch 1 und 2 **dadurch gekennzeichnet**, dass der aktive Regelvorgang der Längsdynamikregelung des Kraftfahrzeuges in einen Fehlermodus geht, wenn der Beschleunigungsistwert ausserhalb des den Beschleunigungssollwert kennzeichnenden Fehlerkorridors liegt.

6. Verfahren nach einem der vorhergehenden Anspüche 1 bis 5, **dadurch gekennzeichnet**, dass der Beschleunigungssollwert in einem ersten Fahrdynamiksystem des Fahrzeuges bestimmt und der ermittelte Beschleunigungssollwert zur Ansteuerung eines zweiten Fahrdynamiksystems des Fahrzeuges an dieses ausgegeben wird, welches den ermittelten Beschleunigungssollwert mit dem Beschleunigungsistwert vergleicht und im Ergebnis des Vergleichs ein geschwindigkeitsregulierendes Stellelement des Kraftfahrzeuges ansteuert.

7. Verfahren nach Anspruch 6 **dadurch gekennzeichnet**, dass das erste Fahrdynamiksystem eine Abstandsregeleinrichtung zur Einstellung des Abstandes des zu regelnden Fahrzeuges zu einem vorausfahrenden Fahrzeug beinhaltet, welche aus einem einzustellenden Abstand den Beschleunigungssollwert ermittelt.

8. Verfahren nach Anspruch 6, **dadurch gekennzeichnet**, dass der Beschleunigungssollwert zur Ansteuerung einer Bremseinrichtung des Kraftfahrzeuges dient.

9. Verfahren nach Anspruch 6, **dadurch gekennzeichnet**, dass der Beschleunigungssollwert zur Ansteuerung einer Motorsteuerelektronik des Kraftfahrzeuges dient.

10. Verfahren nach Anspruch 6, **dadurch gekennzeichnet**, dass der Beschleunigungssollwert zur Ansteuerung einer Antriebsstrangregelung dient.

11. Verfahren nach Anspruch 10, **dadurch gekennzeichnet**, dass der Beschleunigungssollwert zur Ansteuerung einer Getriebesteuerung dient.

12. Verfahren nach Anspruch 6, **dadurch gekennzeichnet**, dass der Beschleunigungssollwert vom Fahrer vorgegeben wird.
